# EUROPEAN PATENT SPECIFICATION

(11) **EP 3 292 450 B1**
(45) Date of publication and mention of the grant of the patent: **29.05.2019**
(21) Application number: 16721159.8
(22) Date of filing: 06.05.2016
(51) Int. Cl.: G05D 23/13, F16K 15/02, F16K 17/04

(54) **THERMOSTATIC MIXING VALVE**
THERMOSTATMISCHVENTIL
ROBINET MÉLANGEUR THERMOSTATIQUE

(30) Priority: 06.05.2015 EP 15166532
(43) Date of publication of application: 14.03.2018
(73) Proprietor: ESBE AB, 330 21 Reftele (SE)
(72) Inventor: BENGTSSON, Dan, 333 93 Skeppshult (SE)
(74) Representative: AWA Sweden AB
(86) International application number: PCT/EP2016/060161
(87) International publication number: WO 2016/177873

(56) References cited:
- WO-A1-01/22185
- US-B2- 8 500 035

## Description

### Field of the Invention

The present invention relates to a thermostatic mixing valve comprising a valve housing with a hot fluid inlet, a cold fluid inlet, a fluid mixing chamber for receiving fluid from the hot and the cold fluid inlet, and a fluid outlet in fluid communication with the fluid mixing chamber, a spring-biased flow control assembly for controlling flow of fluid to the fluid mixing chamber, a spring, and a thermostat device for operating the flow control assembly, the flow control assembly being arranged to be biased by the spring, wherein the flow control assembly is adapted to be moved by the thermostat device in response to a temperature of the fluid in the mixing chamber such as to close and open a respective fluid communication of the cold fluid inlet and hot fluid inlet with the fluid mixing chamber such as to maintain said temperature at, or at least close to, a preset temperature.

### Background of the Invention

Thermostatic mixing valves may be used to regulate the fluid temperature in emergency showers or eyewashers.

Such thermostatic mixing valves may be provided with a cold fluid bypass arrangement in order to secure a flow of fluid in the event of hot fluid supply failure.

US 8,500,035 discloses a thermostatic mixing valve including a cold water bypass passageway that opens upon a failure of a hot water supply.

A drawback of this thermostatic mixing valve is that it may be considered to be complex.

### Summary of the Invention

It is an object of the present invention to overcome the above described drawback, and to provide an improved thermostatic mixing valve.

This and other objects that will be apparent from the following summary and description are achieved by a thermostatic mixing valve according to the appended claims.

According to one aspect of the present disclosure there is provided a thermostatic mixing valve comprising a valve housing with a hot fluid inlet, a cold fluid inlet, a fluid mixing chamber for receiving fluid from the hot and the cold fluid inlet, and a fluid outlet in fluid communication with the fluid mixing chamber, a spring-biased flow control assembly for controlling flow of fluid to the fluid mixing chamber, a spring, and a thermostat device for operating the flow control assembly the flow control assembly being arranged to be biased by the spring, wherein the flow control assembly is adapted to be moved by the thermostat device in response to a temperature of the fluid in the mixing chamber, wherein the spring is arranged between the flow control assembly and a cup-shaped portion of said valve housing, said fluid communication of the cold fluid inlet with the fluid mixing chamber occurring around said cup-shaped portion, and the thermostatic mixing valve comprises a cold fluid bypass opening being an opening in said cup-shaped portion, a bypass closure member movable between a closed position in which said cold fluid bypass opening is closed by the bypass closure member and an open position in which the cold fluid bypass opening is open and allows a bypass flow of cold fluid to the mixing chamber through said cold fluid bypass opening, and a holding device arranged to apply a holding force to the bypass closure member to hold the bypass closure member in the closed position, and wherein the bypass closure member is arranged to be moved from the closed position to the open position when a pressure force exerted to a pressure surface of the bypass closure member by cold fluid in the cold fluid inlet exceeds said holding force.

A thermostatic mixing valve according to the present disclosure allows a compact and simple valve design. Furthermore, it provides for easy and quick installation of the valve in a system.

During normal operation of the thermostatic mixing valve the bypass closure member is held in the closed position by the holding device. In case of a hot fluid supply failure, such as a hot water supply failure, the thermostat device moves the flow control member toward a position in which the ordinary cold fluid passageway through the valve is closed. Since the ordinary cold fluid opening is blocked the pressure force acting on the pressure surface of the closure member is then increasing and when the pressure force exerted to the pressure surface exceeds the holding force the bypass closure member is urged away from the closed position, thereby allowing flow of cold fluid from the cold fluid inlet to the mixing chamber. Hence, cold fluid is allowed to enter the mixing chamber although the thermostat device holds the fluid control member in a position in which it blocks the normal cold fluid path through the valve. This has the advantage that a sufficient flow of fluid may be delivered even upon a hot fluid failure.

Hence, this thermostatic mixing valve includes a cold fluid bypass passageway controlled by a pressure-operated closure member that opens upon a failure of a hot fluid supply to the valve. The thermostatic mixing valve may be used with safety devices, such as eyewash and drench shower stations, and allows the continued delivery of cold fluid upon hot fluid supply failure. The thermostatic mixing valve may thus allow continued delivery of cold water upon hot water supply failure.

Hence, in a normal operating mode the closure member is held in the closed position by the holding device and in a bypass operating mode the bypass closure member is held in the open position by a pressure force exerted thereon by cold fluid in the cold fluid inlet.

According to one embodiment said bypass opening is formed in a bottom wall of said cup-shaped portion.

According to one embodiment bypass opening is situated centrally in said bottom wall.

According to one embodiment said bypass opening is a central opening in a base surface of the cup-shaped portion, such as a bottom cup, of said valve housing. The bypass opening may thus be arranged in a base surface of a bottom cup of the valve housing.

According to one embodiment the central opening is circular or elliptical.

According to one embodiment the central opening is circular with a diameter of 6-20 mm, more preferably 8-18 mm and most preferably 11-15 mm.

According to one embodiment the area of the central opening is 30-314 mm², more preferably 50-250 mm² and most preferably 95-180 mm².

According to one embodiment the central opening is surrounded by a seat against which the bypass closure member is biased by the holding device.

According to one embodiment the holding device comprises a spring and preferably a conical spring.

According to one embodiment the spring is a coil spring.

The bypass closure member may thus be spring-biased, which provides for a robust and reliable bypass arrangement.

According to one embodiment said bypass closure member is disc-shaped.

According to one embodiment the hot fluid inlet and the cold fluid inlet are disposed perpendicular to each other in order to provide a certain flow pattern. Then, the valve employs an L-shaped flow pattern, which enables the valve to be installed in a system in a very easy and quick manner. Furthermore, it may facilitate service and maintenance of the valve and/or the system in which the valve is installed. The valve may thus be an L-pattern thermostatic mixing valve.

According to one embodiment the hot fluid inlet and the cold fluid outlet are disposed opposite to each other in order to provide a certain flow pattern.

According to one embodiment the hot fluid inlet and the fluid outlet are disposed opposite to each other and the cold fluid inlet is disposed perpendicular to each of the hot fluid inlet and the fluid outlet. Hence, in this embodiment the valve ports of the thermostatic mixing valve are arranged in a T-configuration.

According to one embodiment the spring being arranged to bias the flow control assembly is a compression spring.

According to another aspect of the present disclosure there is provided a safety shower system, such as an eyewash or emergency shower system, which safety shower system comprises a thermostatic mixing valve according to the present disclosure.

These and other aspects of the invention will be apparent from and elucidated with reference to the claims and the embodiments described hereinafter.

### Brief description of the drawings

The invention will now be described in more detail with reference to the appended schematic drawings in which:
Fig. 1 is a cross section showing a thermostatic mixing valve according to an embodiment of the present disclosure in a normal operating mode.
Fig. 2 is a cross section showing the thermostatic mixing valve shown in Fig. 1 upon a hot water supply failure.

### Description of preferred embodiments

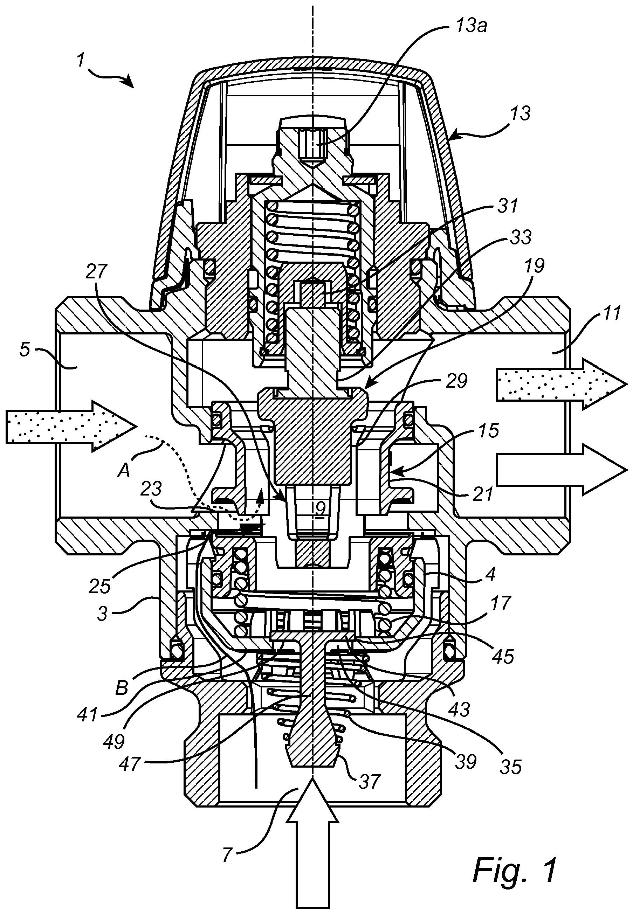

Fig. 1 illustrates a thermostatic mixing valve 1, in the form of an L-pattern thermostatic mixing valve, according to an embodiment of the present disclosure. The thermostatic mixing valve 1 comprises a housing 3 with a hot water inlet 5, a cold water inlet 7, a mixing chamber 9 for receiving water from the hot and the cold water inlet, as illustrated by the arrows A and B, respectively, in Fig. 1. The hot fluid inlet 5 and the cold fluid inlet 7 are disposed perpendicular to each other. In this embodiment, the thermostatic mixing valve thus employs an L-shaped flow pattern, although other flow patterns, such as a T-shaped flow pattern, are possible. The mixed water exits the mixing chamber 9 through a fluid outlet 11.

The desired fluid temperature is preset by means of a schematically shown actuator 13. The actuator 13 presets the temperature in a known manner by screwing in or out an adjustment screw 13a inserted in the upper part of the valve housing 3.

The thermostatic mixing valve 1 further comprises a flow control assembly 15, a spring, in the form of a compression spring 17, and a thermostat device 19. The compression spring 17 is arranged to bias the flow control assembly 15. The flow control assembly 15 is thus spring-biased by the compression spring 17. The compression spring 17 is arranged between the flow control assembly 15 and a cup-shaped portion, in the form of a bottom cup 4, of the valve housing 3. The cup-shaped portion 4, which is a stationary part of the valve 1, comprises a bottom wall 41 and a side wall extending upwardly from the bottom wall 41. Fluid communication of the cold fluid inlet 7 with the fluid mixing chamber 9 may occur around said cup-shaped portion 4.

The flow control assembly 15 comprises a valve piston 21 which is continuously movable between a first seat 23 with closed hot water inlet 5 and opened cold water inlet 7 and a second seat 25 with closed cold water inlet 7 and opened hot water inlet 5. Hence, when the valve piston 21 is seated against the first seat 23 fluid communication between the hot water inlet 5 and the mixing chamber 9 is blocked by the valve piston 21 and when the valve piston 21 is seated against the second seat 25 fluid communication between the cold water inlet 7 and the mixing chamber 9 is blocked by the valve piston 21. When the cold fluid inlet 7 is open the fluid communication of the cold fluid inlet 7 with the fluid mixing chamber 9 occurs around the cup-shaped portion 4 of the housing 3.

The thermostat device 19 comprises a temperature responsive control member 27 which is arranged in the mixing chamber 9 for affecting the valve piston 21 according to the preset temperature. The temperature responsive control member 27 and the valve piston 21 are movable together in the mixing chamber 9, immobilized in relation to each other.

The temperature responsive control member 27 is arranged to respond to the temperature in the mixing chamber 9 by means of a thermostat piston 31 slidable in a sleeve 33 formed integrally with the temperature responsive control member 27. The position of the adjustment screw 13a of the actuator 13 defines an end position for the thermostat piston 31 and corresponds to the desired fluid temperature in the mixing chamber 9.

The temperature responsive control member 27 comprises a wax element enclosed in a casing 29 and responding to the temperature of the fluid in the mixing chamber 9 by expanding with rising temperature or contracting with falling temperature. When expanding, the thermostat piston 31, is pushed upwards in a sleeve 33, moving the valve piston 21 downwards against the action of the spring 17. This closes the hot water inlet 5 and opens the cold water inlet 7. When contracting, the valve piston 21 is pushed upwards by the action of the spring 17, pressing the thermostat piston 31 into the sleeve 33.

The flow control assembly 15 is thus adapted to be moved by the thermostat device 19 in response to a preset temperature. The thermostat device 19 senses the temperature of fluid in the mixing chamber 9 and regulates the flow of hot fluid as needed, to maintain the temperature at, or at least close to, the preset temperature.

The mixing valve 1 further comprises a cold water bypass opening, in the form of a central opening 35 in the bottom cup 4 of the valve housing 3, a bypass closure member 37 and a holding device in the form of a conical coil spring 39. The central opening 35 is disposed in a base surface of a bottom wall 41 of the bottom cup 4 of the valve housing 3.

The bypass closure member 37 is movable between a closed position in which the cold water bypass opening 35 is closed by the bypass closure member 37 and an open position in which the cold water bypass opening 35 is open and allows flow from the cold water inlet 7 to the mixing chamber 9.

The bypass closure member 37 comprises a disc-shaped closure portion 43, which is spring-biased by the conical spring 39 against a seat 45 surrounding the bypass opening 35, and a stem 47 which is fixed to the disc-shaped closure portion 43.

The holding device 39 is thus arranged for applying a holding force to the valve closure member 37, which holding force holds the bypass closure member 37 in the closed position.

During normal operation of the thermostatic mixing valve 1, i.e. when hot and cold water supply is present, the bypass closure member 37 is held in the closed position by the holding device 39.

The thermostatic mixing 1 valve may be used to regulate the fluid temperature in emergency shower or eyewash systems. In such systems it is desired to continue deliver a predetermined flow even in the event of hot water supply failure.

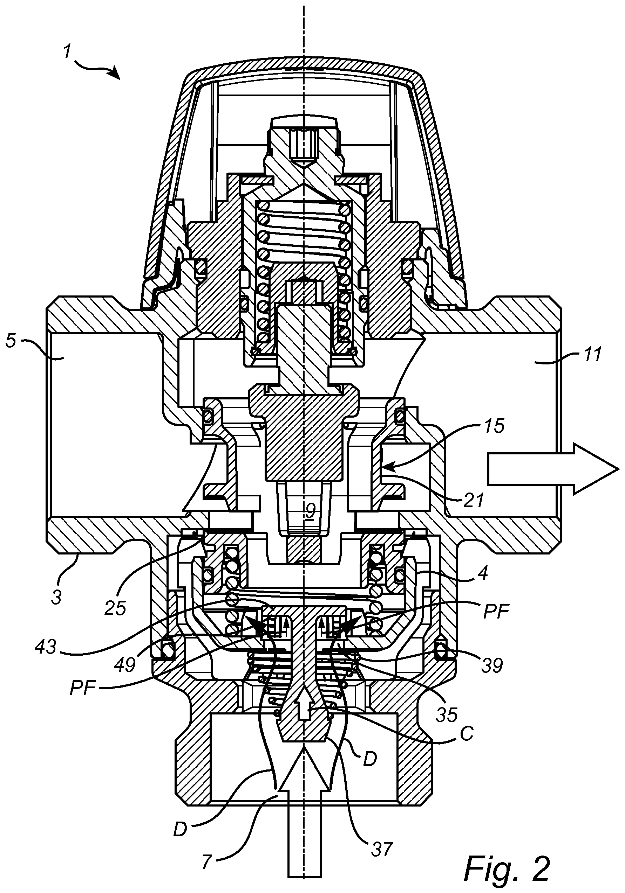

Now referring to Fig. 2 the function of the thermostatic mixing valve 1 will be further described.

Upon hot water supply failure in a safety system, such as an eyewash shower system or a drench shower system, fitted with the thermostatic valve 1 the thermostatic device 19 acts to move the valve piston 21 toward the seat 25, thereby blocking cold water supply through the ordinary path through the thermostatic mixing valve 1.

Then, the pressure force PF exerted to the pressure surface 49 of the disc-shaped closure portion 43 by cold water in the cold water inlet 7 increases. When this pressure force exceeds the predetermined holding force the disc-shaped closure portion 43 will be urged away from the valve seat 45, i.e. moved to an open position. In the open position, illustrated in Fig. 2, the closure member 37 allows cold water to pass through the bypass opening 35 as illustrated by the arrow D in Fig. 2.

Hence, upon a pressure force PF, exerted to the pressure surface 49 of the bypass closure member 37 by fluid in the cold water inlet 7, that exceeds the holding force exerted by the holding device 39 a bypass path through the flow control assembly 15 is opened, causing cold water to enter the mixing chamber 9, as illustrated by arrows D in Fig. 2, and exit the same via the fluid outlet 11.

Hence, upon a hot water supply failure the lack of hot water causes an ordinary cold water opening to be closed by the thermostatic device, the wax element of which retracts upon the lack of hot water.

The bypass passageway, illustrated by arrows D in Fig. 2, formed by the bypass opening 35 is adapted to allow sufficient flow of cold water to bypass the ordinary opening and be directed to the mixing chamber 9.

Upon hot water supply failure, the ordinary cold water passageway, which is formed around the cup-shaped portion 4 of the housing 3, is thus bypassed whereby a cold water bypass flow occurs through the cold fluid bypass opening 35.

A sufficient cold water flow may thus be delivered in the emergency system comprising the thermostatic mixing valve 1 upon a hot water supply failure.

It will be appreciated that numerous variants of the embodiments described above are possible within the scope of the appended claims.

For example, various types of adjustment means, temperature responsive control members and actuators could be used.

## Claims

1. A thermostatic mixing valve (1) comprising
a valve housing (3) with a hot fluid inlet (5), a cold fluid inlet (7), a fluid mixing chamber (9) for receiving fluid from the hot and the cold fluid inlet, and a fluid outlet (11) in fluid communication with the fluid mixing chamber (9),
a spring-biased flow control assembly (15) for controlling flow of fluid to the fluid mixing chamber (9),
a spring (17), and
a thermostat device (19) for operating the flow control assembly (15), the flow control assembly (15) being arranged to be biased by the spring (17),
wherein the flow control assembly (15) is adapted to be moved by the thermostat device (19) in response to a temperature of the fluid in the mixing chamber (9) such as to close and open a respective fluid communication of the cold fluid inlet and hot fluid inlet with the fluid mixing chamber such as to maintain said temperature at, or at least close to, a preset temperature,
**characterized in that** the spring (17) is arranged between the flow control assembly (15) and a cup-shaped portion (4) of said valve housing (3), said fluid communication of the cold fluid inlet with the fluid mixing chamber (9) occurring around said cup-shaped portion (4), and
the thermostatic mixing valve (1) comprises
a cold fluid bypass opening (35) being an opening in said cup-shaped portion (4),
a bypass closure member (37) movable between a closed position in which said cold fluid bypass opening (35) is closed by the bypass closure member (37) and an open position in which the cold fluid bypass opening (35) is open and allows a bypass flow of cold fluid to the mixing chamber (9) through said cold fluid bypass opening (35), and
a holding device (39) arranged to apply a holding force to the bypass closure member (37) to hold the bypass closure member (37) in the closed position,
wherein the bypass closure member (37) is arranged to be moved from the closed position to the open position when a pressure force (PF) exerted to a pressure surface (49) of the bypass closure member (37, 43) by cold fluid in the cold fluid inlet (7) exceeds said holding force.

2. Thermostatic mixing valve (1) according to claim 1, wherein said bypass opening (35) is formed in a bottom wall (41) of said cup-shaped portion (4).

3. Thermostatic mixing valve (1) according to claim 2, wherein said bypass opening (35) is situated centrally in said bottom wall (41).

4. Thermostatic mixing valve (1) according to claim 1, wherein said bypass opening (35) is a central opening in a base surface (41) of the cup-shaped portion (4) of said valve housing (3).

5. Thermostatic mixing valve (1) according to any of the preceding claims, wherein said central opening (35) is circular.

6. Thermostatic mixing valve (1) according to claim 5, wherein the diameter of said central opening (35) is 6-20 mm, more preferably 8-18 mm and most preferably 11-15 mm.

7. Thermostatic mixing valve (1) according to any of the preceding claims, wherein the area of said central opening (35) is 30-314 mm², more preferably 50-250 mm² and most preferably 95-180 mm².

8. Thermostatic mixing valve (1) according to any of the preceding claims, wherein the bypass opening (35) has a seat (45) against which a closure portion (43) of the closure member (37) is biased by the holding device (39).

9. Thermostatic mixing valve (1) according to any of the preceding claims, wherein the holding device (39) comprises a spring (39) and preferably a conical spring (39).

10. Thermostatic mixing valve (1) according to any of the preceding claims, wherein said bypass closure member (37) comprises a disc-shaped closure portion (43).

11. Thermostatic mixing valve (1) according to any of the preceding claims, wherein the hot fluid inlet (5) and the cold fluid inlet (7) are disposed perpendicular to each other.

12. Thermostatic mixing valve according to any of the preceding claims, wherein the hot fluid inlet (5) and the fluid outlet (11) are disposed opposite to each other.

13. Thermostatic mixing valve (1) according to any of the preceding claims, wherein the hot fluid inlet (5) and the fluid outlet (11) are disposed opposite to each other and the cold fluid inlet (7) is disposed perpendicular to each of the hot fluid inlet (5) and the fluid outlet (11).

14. Thermostatic mixing valve (1) according to any of the preceding claims, wherein the spring (17) being arranged to bias the flow control assembly (15) is a compression spring.

15. Safety shower system, such as an eyewash or emergency shower system, which safety shower system comprises a thermostatic mixing valve (1) according to any of the preceding claims.

## Patentansprüche

1. Thermostatisches Mischventil (1), umfassend:
ein Ventilgehäuse (3) mit einem Einlass (5) für heiße Flüssigkeit, einem Einlass (7) für kalte Flüssigkeit, einer Flüssigkeits-Mischkammer (9) zum Empfangen von Flüssigkeit von dem Einlass für heiße und kalte Flüssigkeit und einen Auslass (11) für Flüssigkeit in fluidischer Kommunikation mit der Flüssigkeits-Mischkammer (9),
eine Flusssteuerungs-Gruppe (15) mit Federvorspannung zum Steuern des Flusses der Flüssigkeit zur Flüssigkeits-Mischkammer (9),
eine Feder (17) und
eine Thermostatvorrichtung (19) zum Betreiben des Flusses der Flusssteuerungs-Gruppe (15), wobei die Flusssteuerungs-Gruppe (15) angeordnet ist, um durch die Feder (17) vorgespannt zu sein,
wobei die Flusssteuerungs-Gruppe (15) geeignet ist, um von der Thermostatvorrichtung (19) als Antwort auf eine Temperatur der Flüssigkeit in der Mischkammer (9) derart bewegt zu werden, dass eine jeweilige fluidische Kommunikation des Einlasses für kalte Flüssigkeit und des Einlasses für heiße Flüssigkeit mit der Flüssigkeits-Mischkammer derart geschlossen und geöffnet wird, dass die Temperatur in oder wenigstens ungefähr in einer voreingestellten Temperatur gehalten wird,
**dadurch gekennzeichnet, dass**
die Feder (17) zwischen der Flusssteuerungs-Gruppe (15) und einem tassenförmigen Abschnitt (4) des Ventilgehäuses (3) angeordnet ist, wobei die fluidische Kommunikation des Einlasses für kalte Flüssigkeit mit der Flüssigkeitsmisch-Mischkammer (9) um den genannten tassenförmigen Abschnitt (4) auftritt und
das thermostatische Mischventil (1) umfasst
eine Umleitungsöffnung (35) einer kalten Flüssigkeit, die eine Öffnung in dem genannten tassenförmigen Abschnitt (4) ist,
ein Umleitungs-Verschlusselement (37), das zwischen einer geschlossenen Position, in der die Umleitungsöffnung (35) einer kalten Flüssigkeit durch das Umleitungs-Verschlusselement (37) geschlossen wird und einer offenen Position, in der die Umleitungsöffnung (35) einer kalten Flüssigkeit offen ist und einen Umleitungsstrom kalter Flüssigkeit zur Mischkammer (9) durch die Umleitungsöffnung (35) einer kalten Flüssigkeit zulässt, bewegbar ist, und
eine Haltevorrichtung (39), die angeordnet ist; um eine Haltekraft auf das Umleitungs-Verschlusselement (37) anzuwenden, um das Umleitungs-Verschlusselement (37) in der geschlossenen Position zu halten,
wobei das Umleitungs-Verschlusselement (37) angeordnet ist, um von der geschlossenen Position zur offenen Position bewegt zu sein, wenn eine Druckkraft (PF), die auf eine Druckfläche (49) des Umleitungs-Verschlusselements (37, 43) durch kalte Flüssigkeit in dem Einlass für kalte Flüssigkeit (7) ausgeübt ist, die Haltekraft übersteigt.

2. Thermostatisches Mischventil (1) nach Anspruch 1, wobei die Umleitungsöffnung (35) in einer Bodenwand (41) des tassenförmigen Abschnitts (4) gebildet ist.

3. Thermostatisches Mischventil (1) nach Anspruch 2, wobei die Umleitungsöffnung (35) zentral in der Bodenwand (41) angeordnet ist.

4. Thermostatisches Mischventil (1) nach Anspruch 1, wobei die Umleitungsöffnung (35) eine zentrale Öffnung in einer Grundfläche (41) des tassenförmigen Abschnitts (4) des Ventilgehäuses (3) ist.

5. Thermostatisches Mischventil (1) nach irgendeinem der voranstehenden Ansprüche, wobei die zentrale Öffnung (35) kreisförmig ist.

6. Thermostatisches Mischventil (1) nach Anspruch 5, wobei der Durchmesser der zentralen Öffnung (35) 6 - 20 mm, bevorzugt 8 - 18 mm und stärker bevorzugt 11 - 15 mm beträgt.

7. Thermostatisches Mischventil (1) nach irgendeinem der voranstehenden Ansprüche, wobei der Bereich der zentralen Öffnung (35) 30 - 314 mm², bevorzugt 50 - 250 mm² und weiter bevorzugt 95 - 180 mm² beträgt.

8. Thermostatisches Mischventil (1) nach irgendeinem der voranstehenden Ansprüche, wobei die Umleitungsöffnung (35) einen Sitz (45) aufweist, gegen den ein Verschlussabschnitt (43) des Verschlusselements (37) durch die Haltevorrichtung (39) vorgespannt ist.

9. Thermostatisches Mischventil (1) nach irgendeinem der voranstehenden Ansprüche, wobei die Haltevorrichtung (39) eine Feder (39) und bevorzugt eine konische Feder (39) umfasst.

10. Thermostatisches Mischventil (1) nach irgendeinem der voranstehenden Ansprüche, wobei das Umleitungs-Verschlusselement (37) einen scheibenförmigen Verschlussabschnitt (43) umfasst.

11. Thermostatisches Mischventil (1) nach irgendeinem der voranstehenden Ansprüche, wobei der Einlass (5) für heiße Flüssigkeit und der Einlass (7) für kalte Flüssigkeit lotrecht zueinander angeordnet sind.

12. Thermostatisches Mischventil nach irgendeinem der voranstehenden Ansprüche, wobei der Einlass (5) für heiße Flüssigkeit und der Auslass (11) für Flüssigkeit einander gegenüber angeordnet sind.

13. Thermostatisches Mischventil (1) nach irgendeinem der voranstehenden Ansprüche, wobei der Einlass (5) für heiße Flüssigkeit und der Auslass (11) für Flüssigkeit einander gegenüber angeordnet sind und der Einlass (7) für kalte Flüssigkeit lotrecht zum Einlass (5) für heiße Flüssigkeit und dem Auslass (11) für Flüssigkeit angeordnet ist.

14. Thermostatisches Mischventil (1) nach irgendeinem der voranstehenden Ansprüche, wobei die Feder (17), die angeordnet ist, um die Flusssteuerungs-Gruppe (15) vorzuspannen, eine Druckfeder ist.

15. Sicherheitsdusch-System, wie z. B. ein Augendusch- oder ein Notfalldusch-System, wobei das Sicherheitsdusch-System ein thermostatisches Mischventil (1) nach irgendeinem der voranstehenden Ansprüche umfasst.

## Revendications

1. Soupape de mélange thermostatique (1) comprenant
un boîtier de soupape de mélange (3) avec une entrée de fluide chaud (5), une entrée de fluide froid (7), une chambre de mélange de fluide (9) destinée à recevoir du fluide par l'entrée de fluide chaud et l'entrée de fluide froid, et une sortie de fluide (11) en communication fluidique avec la chambre de mélange de fluide (9),
un ensemble de régulation de flux (15) sollicité par ressort, destiné à réguler le flux de fluide vers la chambre de mélange de fluide (9),
un ressort (17), et
un dispositif à thermostat (19) destiné à commander l'ensemble de régulation de flux (15), l'ensemble de régulation de flux (15) étant conçu pour être sollicité par le ressort (17),
dans laquelle l'ensemble de régulation de flux (15) est adapté pour être déplacé par le dispositif à thermostat (19) en réponse à une température du fluide dans la chambre de mélange (9), de manière à fermer et ouvrir une communication fluidique respective de l'entrée de fluide froid et de l'entrée de fluide chaud avec la chambre de mélange de fluide de manière à maintenir ladite température à une température prédéfinie ou du moins proche de celle-ci,
**caractérisée en ce que**
le ressort (17) est disposé entre l'ensemble de régulation de flux (15) et une partie en forme de coupelle (4) dudit boîtier de soupape (3), ladite communication fluidique de l'entrée de fluide froid avec la chambre de mélange de fluide (9) étant réalisée autour de ladite partie en forme de coupelle (4), et
la soupape de mélange thermostatique (1) comprend
une ouverture de dérivation de fluide froid (35) consistant en une ouverture dans ladite partie en forme de coupelle (4),
un élément de fermeture de dérivation (37) déplaçable entre une position fermée dans laquelle ladite ouverture de dérivation de fluide froid (35) est fermée par l'élément de fermeture de dérivation (37) et une position ouverte dans laquelle l'ouverture de dérivation de fluide froid (35) est ouverte et permet un flux de dérivation de fluide froid vers la chambre de mélange (9) à travers ladite ouverture de dérivation de fluide froid (35), et
un dispositif de maintien (39) conçu pour appliquer une force de maintien à l'élément de fermeture de dérivation (37) pour maintenir l'élément de fermeture de dérivation (37) dans la position fermée,
dans laquelle l'élément de fermeture de dérivation (37) est conçu pour être déplacé de la position fermée vers la position ouverte lorsqu'une force de pression (PF) exercée sur une surface de pression (49) de l'élément de fermeture de dérivation (37, 43) par du fluide froid dans l'entrée de fluide froid (7) dépasse ladite force de maintien.

2. Soupape de mélange thermostatique (1) selon la revendication 1, dans laquelle ladite ouverture de dérivation (35) est formée dans une paroi inférieure (41) de ladite partie en forme de coupelle (4).

3. Soupape de mélange thermostatique (1) selon la revendication 2, dans laquelle ladite ouverture de dérivation (35) se trouve au centre de ladite paroi inférieure (41).

4. Soupape de mélange thermostatique (1) selon la revendication 1, dans laquelle ladite ouverture de dérivation (35) est une ouverture centrale dans une surface de base (41) de la partie en forme de coupelle (4) dudit boîtier de soupape (3).

5. Soupape de mélange thermostatique (1) selon l'une quelconque des revendications précédentes, dans laquelle ladite ouverture centrale (35) est circulaire.

6. Soupape de mélange thermostatique (1) selon la revendication 5, dans laquelle le diamètre de ladite ouverture centrale (35) mesure 6 - 20 mm, de façon plus préférentielle 8 - 18 mm et idéalement 11 - 15 mm.

7. Soupape de mélange thermostatique (1) selon l'une quelconque des revendications précédentes, dans laquelle l'aire de ladite ouverture centrale (35) mesure 30 - 314 mm², de façon plus préférentielle 50 - 250 mm² et idéalement 95 - 180 mm².

8. Soupape de mélange thermostatique (1) selon l'une quelconque des revendications précédentes, dans laquelle l'ouverture de dérivation (35) comporte un siège (45) contre lequel une partie de fermeture (43) de l'élément de fermeture (37) est sollicitée par le dispositif de maintien (39).

9. Soupape de mélange thermostatique (1) selon l'une quelconque des revendications précédentes, dans laquelle le dispositif de maintien (39) comprend un ressort (39) et de préférence un ressort conique (39).

10. Soupape de mélange thermostatique (1) selon l'une quelconque des revendications précédentes, dans laquelle ledit élément de fermeture de dérivation (37) comprend une partie de fermeture en forme de disque (43).

11. Soupape de mélange thermostatique (1) selon l'une quelconque des revendications précédentes, dans laquelle l'entrée de fluide chaud (5) et l'entrée de fluide froid (7) sont disposées perpendiculairement l'une par rapport à l'autre.

12. Soupape de mélange thermostatique selon l'une quelconque des revendications précédentes, dans laquelle l'entrée de fluide chaud (5) et la sortie de fluide (11) sont disposées l'une à l'opposé de l'autre.

13. Soupape de mélange thermostatique (1) selon l'une quelconque des revendications précédentes, dans laquelle l'entrée de fluide chaud (5) et la sortie de fluide (11) sont disposées l'une à l'opposé de l'autre et l'entrée de fluide froid (7) est disposée perpendiculairement à chacune parmi l'entrée de fluide chaud (5) et la sortie de fluide (11).

14. Soupape de mélange thermostatique (1) selon l'une quelconque des revendications précédentes, dans laquelle le ressort (17) conçu pour solliciter l'ensemble de régulation de flux (15) est un ressort de compression.

15. Système de douche de sécurité, tel qu'un système de douche d'urgence ou de lavage oculaire, ledit système de douche de sécurité comprend une soupape de mélange thermostatique (1) selon l'une quelconque des revendications précédentes.
